# EUROPEAN PATENT APPLICATION

(11) **EP 4 707 876 A1**
(43) Date of publication of application: **11.03.2026**
(21) Application number: 24938122.9
(22) Date of filing: 23.12.2024
(51) Int. Cl.: G01V 8/10, G01N 35/02, G06M 7/00, G06T 7/254

(54) **MOVING BODY DETECTING DEVICE, MOVING BODY DETECTING METHOD, PROGRAM, AND SYSTEM**

(30) Priority: 28.06.2024 JP 2024105328
(71) Applicant: Nissho Elektron Co., Ltd., Izumisano-shi, Osaka 598-0021 (JP)
(72) Inventor: SINTO, SHOHEI, Izumisano-shi, Osaka 598-0021 (JP)
(74) Representative: Gille Hrabal Partnerschaftsgesellschaft mbB Patentanwälte
(86) International application number: PCT/JP2024/045498
(87) International publication number: WO 2026/004187

(57) **Abstract**

Provided is a moving object detection device and the like which can easily set a detection region for performing detection of a moving object and perform the detection of the moving object. A moving object detection device 10 includes a specifying unit 11 that acquires an image captured by a camera 1 and specifies a predetermined region satisfying a predetermined condition in the image, a setting unit 12 that sets the predetermined region specified by the specifying unit 11 or a region other than the predetermined region specified by the specifying unit 11 in the image as a detection region for performing detection of a moving object, and a detection unit 13 that performs the detection of the moving object in the detection region.

## Description

### Technical Field

The present invention relates to a moving object detection device and the like.

### Background Art

Conventionally, a moving object detection device and the like detecting a moving object have been known. As an example of the moving object detection device and the like, for example, Patent Literature 1 discloses a vehicle detection device that detects any of a plurality of detection areas in which a moving body exists, the detection areas being set for lanes, respectively, within an image capturing range by an imaging device.

### Citation List

### Patent Literature

Patent Literature 1: JP 2021-182325 A

### Summary of Invention

### Technical Problem

Meanwhile, in order to set a detection region for performing detection of a moving object in a captured image, it is necessary to designate the detection region by operating a mouse or designate the detection region by inputting coordinates, and it is desired to easily set the detection region.

Therefore, an object of the present invention is to provide a moving object detection device and the like which can easily set a detection region for performing detection of a moving object and perform the detection of the moving object.

### Solution to Problem

A moving object detection device according to one aspect of the present invention includes: a specifying unit that acquires an image captured by a camera and specifies a predetermined region satisfying a predetermined condition in the image; a setting unit that sets the predetermined region specified by the specifying unit or a region other than the predetermined region specified by the specifying unit in the image as a detection region for performing detection of a moving object; and a detection unit that detects the moving object in the detection region.

In addition, a moving object detection method according to one aspect of the present invention is a moving object detection method performed by a moving object detection device, and includes: a specifying step of acquiring an image captured by a camera and specifying a predetermined region satisfying a predetermined condition in the image; a setting step of setting the predetermined region specified in the specifying step or a region other than the predetermined region specified in the specifying step in the image as a detection region for performing detection of a moving object; and a detection step of performing the detection of the moving object in the detection region.

In addition, a program according to an aspect of the present invention is a program for causing a computer to execute the moving object detection method.

### Advantageous Effects of Invention

According to the present invention, it is possible to provide the moving object detection device and the like which can easily set a detection region for performing detection of a moving object and perform the detection of the moving object.

### Brief Description of Drawings

Fig. 1 is a schematic diagram illustrating a moving object detection device and the like according to an embodiment of the present invention.
Fig. 2 is a block diagram illustrating a functional configuration of the moving object detection device in Fig. 1.
Fig. 3 is a flowchart illustrating an example of an operation in which the moving object detection device in Fig. 1 performs detection of a moving object.
Fig. 4 is a first explanatory view for describing the operation of Fig. 3.
Fig. 5 is a second explanatory view for describing the operation of Fig. 3.
Fig. 6 is a flowchart illustrating an example of an operation in which the moving object detection device in Fig. 1 performs predetermined processing.
Fig. 7 is a first explanatory view for describing the operation of Fig. 6.
Fig. 8 is a second explanatory view for describing the operation of Fig. 6.
Fig. 9 is a flowchart illustrating another example of the operation in which the moving object detection device in Fig. 1 performs predetermined processing.
Fig. 10 is a first explanatory view for describing the operation of Fig. 9.
Fig. 11 is a second explanatory view for describing the operation of Fig. 9.
Fig. 12 is a schematic view illustrating an example of an image captured by a camera.
Fig. 13 is a schematic view illustrating another example of the image captured by the camera.
Fig. 14 is a schematic view illustrating still another example of the image captured by the camera.
Fig. 15 is a flowchart illustrating an example of an operation in which a region designation device performs predetermined processing.

### Description of Embodiments

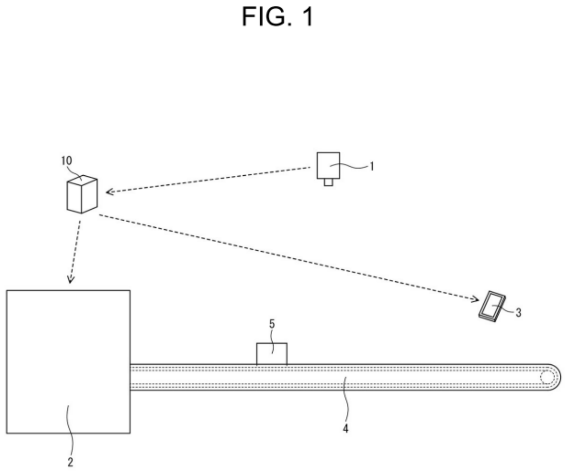

Hereinafter, embodiments of the present invention will be specifically described with reference to the drawings. Fig. 1 is a schematic diagram illustrating a moving object detection device 10 and the like according to an embodiment of the present invention. First, the moving object detection device 10 and the like will be described with reference to Fig. 1.

The moving object detection device 10 is a device that performs detection of a moving object. As illustrated in Fig. 1, in the present embodiment, the moving object detection device 10 acquires an image captured by a camera 1 and performs detection of a moving object based on the image. The moving object detection device 10 performs predetermined processing based on a detection result. For example, the moving object detection device 10 controls a conveyance device 2 based on the detection result. In addition, when detecting the moving object, the moving object detection device 10 notifies a user terminal 3.

The camera 1 is disposed at a position where an image of a belt conveyor 4 can be captured. In the present embodiment, the camera 1 is disposed above the belt conveyor 4 and captures the lower side to capture the image of the belt conveyor 4. Note that the position where the camera 1 is disposed is not limited thereto, and the camera 1 may be disposed so as to capture an image of a place where it is desired to perform detection of a moving object.

The conveyance device 2 is a device that conveys an article 5 to the belt conveyor 4. The article 5 conveyed to the belt conveyor 4 by the conveyance device 2 is conveyed by the belt conveyor 4.

The user terminal 3 is a terminal of a user of the moving object detection device 10. For example, the user terminal 3 is a smartphone, a tablet terminal, a personal computer, or the like.

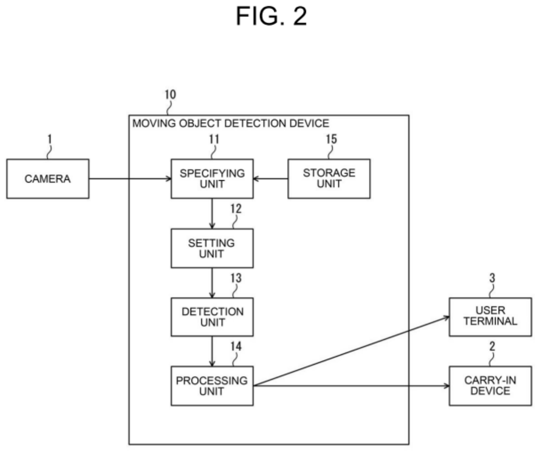

Fig. 2 is a block diagram illustrating a functional configuration of the moving object detection device 10 in Fig. 1. Next, the functional configuration of the moving object detection device 10 will be described with reference to Fig. 2.

As illustrated in Fig. 2, the moving object detection device 10 includes a specifying unit 11, a setting unit 12, a detection unit 13, a processing unit 14, and a storage unit 15. For example, the specifying unit 11, the setting unit 12, the detection unit 13, and the processing unit 14 are configured by a processor, a communication module, and the like, and the storage unit 15 is configured by a memory and the like. The specifying unit 11, the setting unit 12, the detection unit 13, the processing unit 14, and the storage unit 15 may be provided in a single housing or may be provided to be distributed in a plurality of housings.

The specifying unit 11 acquires an image captured by the camera 1 and specifies a predetermined region satisfying a predetermined condition in the image. The image may be a still image or a moving image. The specifying unit 11 directly or indirectly acquires the image from the camera 1 by wireless communication, wired communication, or the like.

The predetermined condition is set in advance by the user or the like and stored in the storage unit 15. For example, the predetermined condition is a predetermined color. In this case, the specifying unit 11 specifies a region of the predetermined color as the predetermined region in the image captured by the camera 1. Specifically, the predetermined color is a primary color or the like. For example, the primary color is red, green, or blue. The specifying unit 11 identifies a color based on an RGB color space, an HSV space, or the like. Note that the predetermined color is not necessarily the primary color, and may be a color other than red, green, and blue.

The setting unit 12 sets the predetermined region specified by the specifying unit 11 or a region other than the predetermined region specified by the specifying unit 11 in the image captured by the camera 1 as a detection region for performing detection of a moving object. Whether to set the predetermined region as the detection region or to set the region other than the predetermined region as the detection region is set in advance by the user or the like, and the setting unit 12 sets the detection region according to the setting by the user or the like. The setting by the user or the like is stored in the storage unit 15. For example, the specifying unit 11 masks (covers) the specified predetermined region, and the setting unit 12 sets the masked region or a region other than the masked region as the detection region.

After the detection region is set by the setting unit 12, the detection region does not need to satisfy the predetermined condition. For example, in a case where the predetermined condition is blue, by covering a place where it is desired to perform detection of a moving object with a blue cloth or the like, a region including the place in the image captured by the camera 1 is specified as the predetermined region satisfying the predetermined condition and set as the detection region. Even if the blue cloth or the like is removed after the detection region is set, the setting of the detection region is maintained, so that the detection of the moving object can be performed at the place in a state where the blue cloth or the like is removed.

The detection unit 13 performs the detection of the moving object in the detection region set by the setting unit 12. For example, the detection unit 13 performs the detection of the moving object using an inter-frame difference method. Specifically, the detection unit 13 performs the detection of the moving object in the detection region from a difference between a plurality of consecutive still images (image frames) in a moving image captured by camera 1. Note that the detection unit 13 may perform the detection of the moving object using a background subtraction method, may perform the detection of the moving object using both the inter-frame difference method and the background subtraction method, or may perform the detection of the moving object using other methods.

In addition, the detection unit 13 may perform the detection of the moving object using not only information of a moving image but also voice information that can be uniquely identified. For example, it may be a sound of a bell (environmental sound) attached to a rotation shaft of a motor (not illustrated) that operates the belt conveyor 4, or a buzzer sound. Furthermore, it may be specific instructed voice information uttered by human. In a case where there is an instruction such as "This sound, this sound!", the specific instructed voice information may be a ringing sound or a human voice itself.

The processing unit 14 performs predetermined processing based on the detection result of the detection unit 13. For example, predetermined processing when the detection unit 13 detects a moving object is processing of notifying the user terminal 3, and the processing unit 14 notifies the user terminal 3 when the detection unit 13 detects a moving object. For example, the processing unit 14 notifies the user terminal 3 by a call application, a chat application, or the like. In addition, predetermined processing when the detection unit 13 no longer detects any moving object is processing of conveying the article 5 to the belt conveyor 4 by the conveyance device 2, and the processing unit 14 conveys the article 5 to the belt conveyor 4 by the conveyance device 2 when the detection unit 13 no longer detects any moving object. The processing unit 14 controls the conveyance device 2 by transmitting a control signal to the conveyance device 2 by wireless communication, wired communication, or the like. Note that the predetermined processing is not limited thereto, and may be processing of executing various programs or the like. For example, the predetermined processing may be processing of stopping the belt conveyor 4 when the detection unit 13 detects a moving object.

For example, the processing unit 14 may cause the belt conveyor 4 to rotate if there is a change based on the detection result of the detection unit 13. In addition, the processing unit 14 may detect whether or not the article 5 coming from the front is moving by the detection unit 13, and start the rotation of the belt conveyor 4 based on the detection result. Data may be managed by ID management and tracking by the camera 1, or may be managed by receiving a request from the user terminal 3. The processing unit 14 can also notify the user terminal 3 of information indicating detection of a moving object, acquire information of the article 5 managed by the user terminal 3, and control the conveyance device 2 based on the information of the article 5. As a result, the moving object detection device 10 itself or a system itself according to the embodiments of the disclosed technology can determine a situation of the article 5. By providing such a processing unit in a terminal on an edge side, information to be transmitted to the processing unit and signal lines can be significantly suppressed as compared with a case where unnecessary information (information indicating that the article 5 is moving at a place other than the conveyance device 2 or stopped) regarding the article 5 is transmitted to the processing unit. Therefore, even in a case where human intervenes for emergency processing or the like or a layout is changed, the moving object detection device 10 performs detection and processing by itself, so that conveyance can be achieved without changing or adjusting other user terminals.

The storage unit 15 stores various types of information. Specifically, as described above, the storage unit 15 stores the predetermined condition and the like.

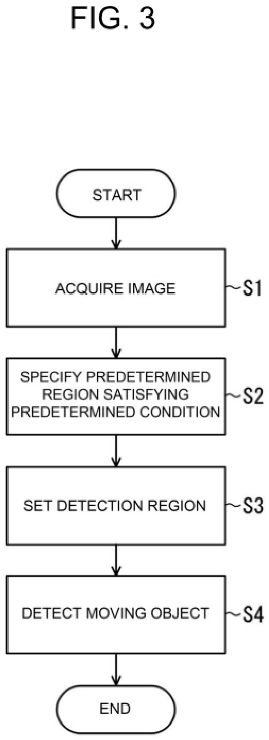

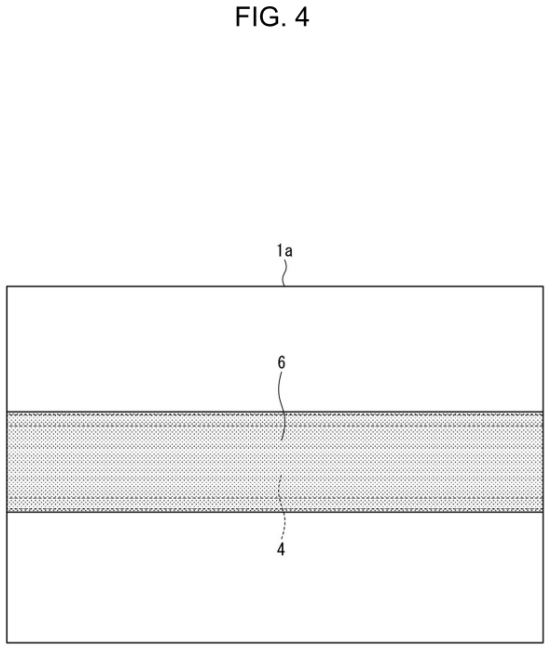

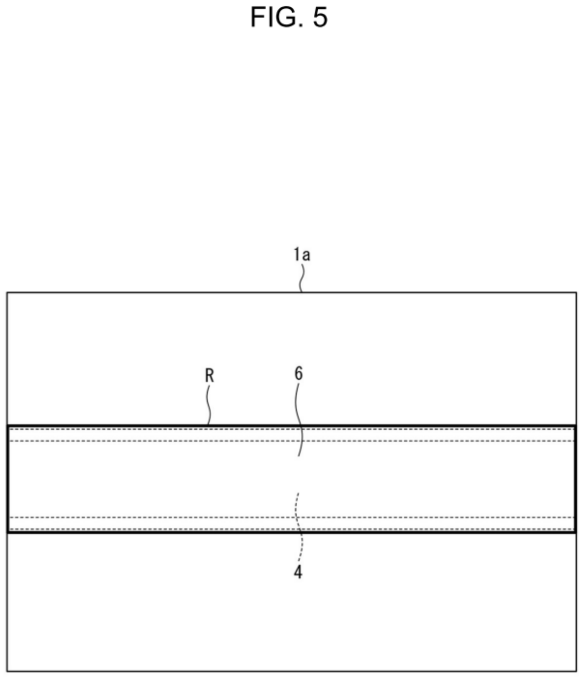

Fig. 3 is a flowchart illustrating an example of an operation in which the moving object detection device 10 of Fig. 1 performs detection of a moving object. Fig. 4 is a first explanatory view for describing the operation of Fig. 3. Fig. 5 is a second explanatory view for describing the operation of Fig. 3. An example of the operation in which the moving object detection device 10 performs detection of a moving object will be described with reference to Figs. 3 to 5.

As illustrated in Fig. 3, the specifying unit 11 acquires an image captured by the camera 1 (step S1), and specifies a predetermined region satisfying a predetermined condition in the acquired image (step S2).

The setting unit 12 sets the predetermined region specified by the specifying unit 11 or a region other than the predetermined region specified by the specifying unit 11 in the image captured by the camera 1 as a detection region for performing detection of a moving object (step S3).

The detection unit 13 performs the detection of the moving object in the detection region (step S4).

For example, as illustrated in Fig. 4, the specifying unit 11 acquires an image 1a captured by the camera 1. Here, the belt conveyor 4 is covered with a planar member 6, and the image 1a shows the belt conveyor 4 covered with the planar member 6. Here, a predetermined condition is blue, and the planar member 6 is a blue cloth. Therefore, in the acquired image 1a, the specifying unit 11 specifies, as a predetermined region, a region (see a dotted portion in Fig. 4) where the planar member 6 is located, and masks (covers) the predetermined region. Note that the planar member 6 is not necessarily a sheet-like member such as cloth, and may be a plate-like member such as a plate material. Masking (covering) means, for example, designating a region having a specific color or pattern in a form of covering the region when the region is identified.

As illustrated in Fig. 5, the setting unit 12 sets the predetermined region specified by the specifying unit 11 as a detection region R (see a thick line in Fig. 5). The detection unit 13 performs detection of a moving object in the detection region R. Here, the planar member 6 is removed during the detection of the moving object performed by the detection unit 13.

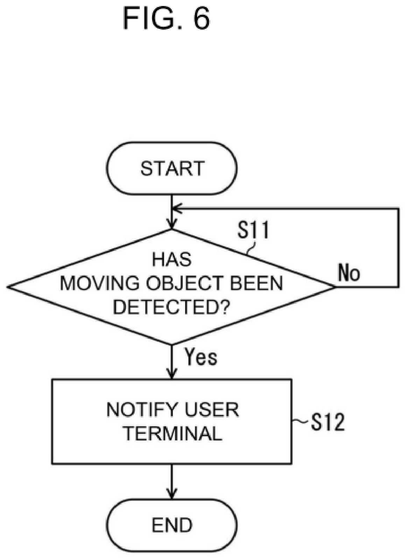

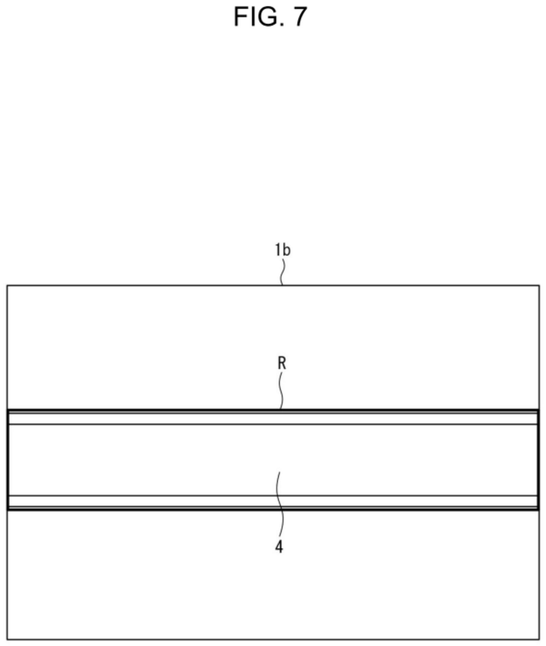

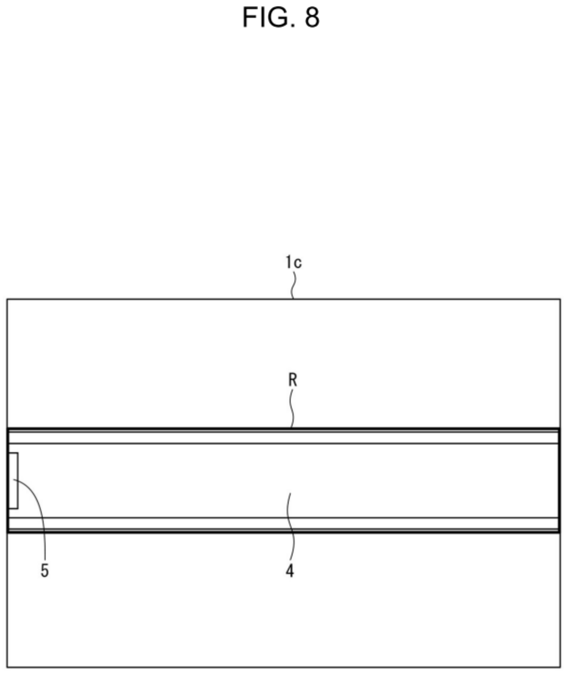

Fig. 6 is a flowchart illustrating an example of an operation in which the moving object detection device 10 in Fig. 1 performs predetermined processing. Fig. 7 is a first explanatory view for describing the operation of Fig. 6. Fig. 8 is a second explanatory view for describing the operation of Fig. 6. An example of the operation in which the moving object detection device 10 performs predetermined processing will be described with reference to Figs. 6 to 8.

As illustrated in Fig. 6, the processing unit 14 determines whether or not the detection unit 13 has detected a moving object (step S11).

When the detection unit 13 has not detected any moving object (No in step S11), the processing unit 14 determines again whether or not the detection unit 13 has detected a moving object (step S11).

When the detection unit 13 has detected a moving object (Yes in step S11), the processing unit 14 notifies the user terminal 3 as predetermined processing (step S12).

For example, in a case where an image 1c illustrated in Fig. 8 is captured continuously after an image 1b illustrated in Fig. 7 by the camera 1, the detection unit 13 detects the article 5 as a moving object. Since the detection unit 13 has detected the moving object, the processing unit 14 notifies the user terminal 3.

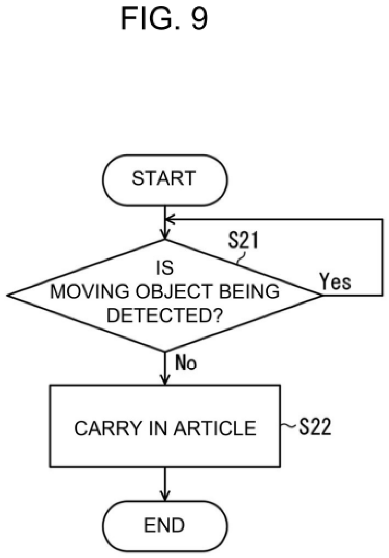

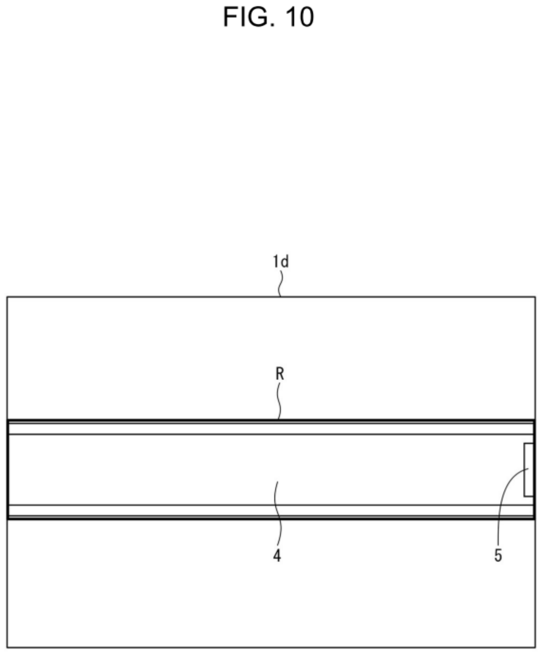

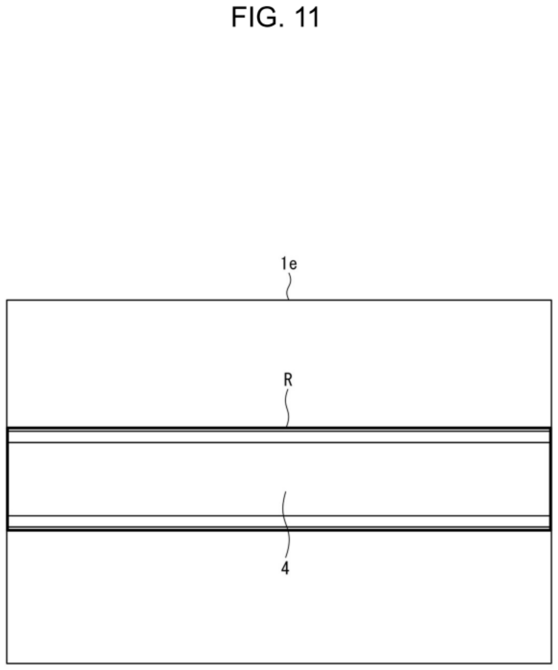

Fig. 9 is a flowchart illustrating another example of the operation in which the moving object detection device 10 in Fig. 1 performs predetermined processing. Fig. 10 is a first explanatory view for describing the operation of Fig. 9. Fig. 11 is a second explanatory view for describing the operation of Fig. 9. Another example of the operation in which the moving object detection device 10 performs predetermined processing will be described with reference to Figs. 9 to 11.

As illustrated in Fig. 9, the processing unit 14 determines whether or not the detection unit 13 is detecting a moving object (step S21).

When the detection unit 13 is detecting a moving object (Yes in step S21), the processing unit 14 determines again whether or not the detection unit 13 is detecting a moving object (step S21). When the detection unit 13 no longer detects any moving object (No in step S21), the processing unit 14 conveys the article 5 as predetermined processing (step S22).

For example, in a case where an image 1e illustrated in Fig. 11 is captured continuously after an image 1d illustrated in Fig. 10 by the camera 1, the detection unit 13 no longer detects any moving object. Since the detection unit 13 no longer detects any moving object, the processing unit 14 conveys the article 5 to the belt conveyor 4 by the conveyance device 2.

In the moving object detection device 10, since a detection region can be set without designating the detection region by operating the mouse or designating the detection region by inputting coordinates, the detection region can be easily set. In addition, in the moving object detection device 10, since detection of a moving object can be performed using the camera 1 without using a photoelectric sensor or the like, an increase in cost can be suppressed, large-scale installation work can be suppressed, introduction can be easily performed, and the detection of the moving object can be easily performed at any position.

As described above, the moving object detection device 10 according to the embodiment of the present invention includes the specifying unit 11 that acquires an image captured by the camera 1 and specifies a predetermined region satisfying a predetermined condition in the image, the setting unit 12 that sets the predetermined region specified by the specifying unit 11 or a region other than the predetermined region specified by the specifying unit 11 in the image as a detection region for performing detection of a moving object, and the detection unit 13 that performs the detection of the moving object in the detection region.

Accordingly, since the detection region can be set by capturing a place where it is desired to perform the detection of the moving object or a place where it is not desired to perform the detection of the moving object by using the camera 1 so as to satisfy the predetermined condition, it is possible to easily set the detection region for performing the detection of the moving object and perform the detection of the moving object.

In addition, the moving object detection device 10 according to the embodiment of the present invention further includes the processing unit 14 that performs predetermined processing based on a detection result of the detection unit 13.

Accordingly, predetermined processing can be performed in a case where the detection unit 13 has detected a moving object, a case where the detection unit 13 no longer detects any moving object, and the like.

In addition, the predetermined processing is processing of notifying the user terminal 3 in the moving object detection device 10 according to the embodiment of the present invention.

Accordingly, the user terminal 3 can be notified in a case where the detection unit 13 has detected a moving object, a case where the detection unit 13 no longer detects any moving object, and the like.

In addition, the predetermined condition is a condition that the color is a predetermined color in the moving object detection device 10 according to the embodiment of the present invention.

Accordingly, since the detection region can be set by applying the predetermined color on a place where it is desired to perform the detection of the moving object or a place where it is not desired to perform the detection of the moving object and capturing the place by using the camera 1, it is possible to more easily set the detection region for performing the detection of the moving object and perform the detection of the moving object.

In addition, the predetermined color is a primary color in the moving object detection device 10 according to the embodiment of the present invention.

Accordingly, since the detection region can be set by applying the primary color on a place where it is desired to perform the detection of the moving object or a place where it is not desired to perform the detection of the moving object and capturing the place by using the camera 1, it is possible to more easily set the detection region for performing the detection of the moving object and perform the detection of the moving object.

In addition, the primary color is red, green, or blue in the moving object detection device 10 according to the embodiment of the present invention.

Accordingly, since the detection region can be set by applying red, green, or blue on a place where it is desired to perform the detection of the moving object or a place where it is not desired to perform the detection of the moving object and capturing the place by using the camera 1, it is possible to more easily set the detection region for performing the detection of the moving object and perform the detection of the moving object.

In addition, the detection unit 13 performs the detection of the moving object using the inter-frame difference method in the moving object detection device 10 according to the embodiment of the present invention.

Accordingly, the moving object can easily be detected using the inter-frame difference method.

In addition, the camera 1 is disposed at a position where the camera 1 can capture an image of the belt conveyor 4 in the moving object detection device 10 according to the embodiment of the present invention.

Accordingly, the belt conveyor 4 or a place other than the belt conveyor 4 can be easily set as the detection region.

In addition, a moving object detection method according to an embodiment of the present invention is a moving object detection method performed by the moving object detection device 10, and includes: a specifying step of acquiring (step S1) an image captured by the camera 1 and specifying (step S2) a predetermined region satisfying a predetermined condition in the image; a setting step (step S3) of setting the predetermined region specified in the specifying step or a region other than the predetermined region specified in the specifying step in the image as a detection region for performing detection of a moving object; and a detection step (step S4) of performing the detection of the moving object in the detection region.

Accordingly, the same functions and effects as those of the moving object detection device 10 are obtained.

In addition, a program according to an embodiment of the present invention is a program for causing a computer to execute the moving object detection method described above.

Accordingly, the same functions and effects as those of the moving object detection device 10 are obtained.

The moving object detection device and the like according to one or a plurality of aspects have been described above based on the embodiments, but the present invention is not limited to the embodiments. Various modifications conceived by those skilled in the art to the present embodiments may also be included in the scope of the present invention without departing from the gist of the present invention.

Although a case where the predetermined condition is the predetermined color has been described in the above-described embodiments, the present invention is not limited thereto. For example, the predetermined condition may be being surrounded by a predetermined color. In this case, the specifying unit 11 specifies a region surrounded by the predetermined color in an image captured by the camera 1 as a predetermined region.

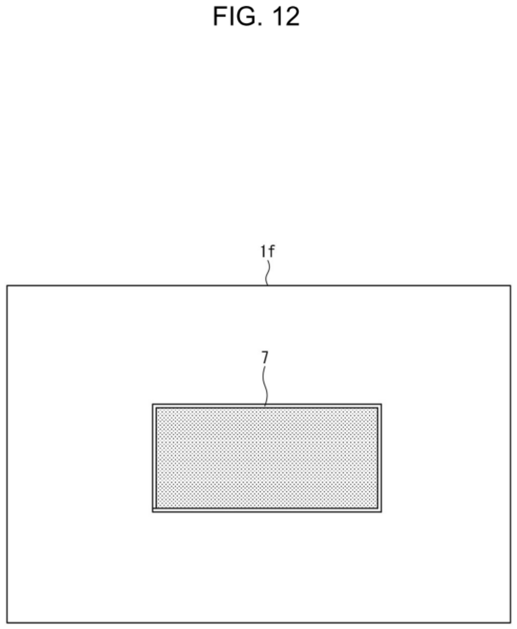

For example, as illustrated in Fig. 12, when acquiring an image 1f captured by the camera 1, the specifying unit 11 specifies a region (see a dotted portion in Fig. 12) surrounded by a linear member 7 of the predetermined color in the image 1f as the predetermined region. In this manner, since a detection region can be set by surrounding a place where it is desired to perform the detection of the moving object or a place where it is not desired to perform the detection of the moving object with the linear member 7 and capturing the place by using the camera 1, it is possible to more easily set the detection region for performing the detection of the moving object and perform the detection of the moving object. For example, the linear member 7 is an elongated member such as a string of the predetermined color.

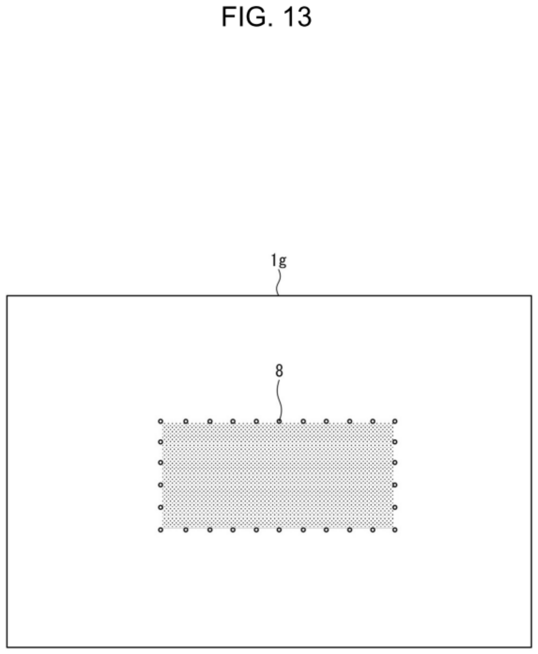

In addition, for example, as illustrated in Fig. 13, when acquiring an image 1g captured by the camera 1, the specifying unit 11 specifies a region (see a dotted portion in Fig. 13) surrounded by a plurality of point-shaped members 8 of the predetermined color in the image 1g as the predetermined region. In this manner, since a detection region can be set by surrounding a place where it is desired to perform the detection of the moving object or a place where it is not desired to perform the detection of the moving object with the plurality of point-shaped members 8 and capturing the place by using the camera 1, it is possible to more easily set the detection region for performing the detection of the moving object and perform the detection of the moving object. For example, the point-shaped member 8 is a circular or polygonal member of the predetermined color.

In addition, a case where the specifying unit 11 specifies the predetermined region satisfying the predetermined condition has been described in the above-described embodiments, but, for example, the specifying unit 11 may further specify a portion that satisfies a condition different from the predetermined condition. In a case where the predetermined condition is that the color is a predetermined color, the different condition is that the color is different from the predetermined color. Specifically, when the predetermined condition is blue, the different condition is red, or the like. In this case, the setting unit 12 sets a portion satisfying the different condition as a portion used for the detection by the detection unit 13. The processing unit 14 performs predetermined processing when the detection unit 13 detects that a moving object has reached the portion satisfying the different condition, or the like.

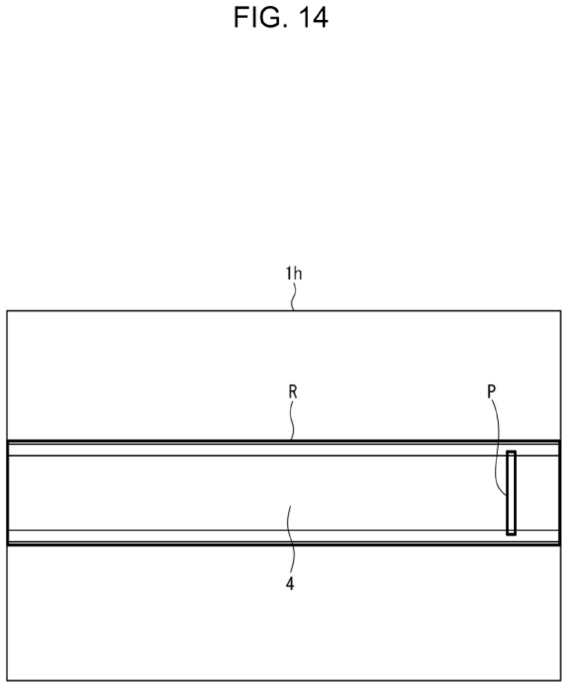

For example, as illustrated in Fig. 14, the setting unit 12 sets the detection region R in an image 1h captured by the camera 1, and sets, as a portion P, a portion specified by the specifying unit 11 as the portion satisfying the condition different from the predetermined condition. For example, the detection region R is a region where a blue cloth is disposed, and the portion P is a portion where a red string or the like is arranged on the blue cloth. The detection unit 13 detects whether or not a moving object has reached the portion P in the detection region R. When the detection unit 13 has detected that the moving object has reached the portion P, the processing unit 14 may convey the article 5 to the belt conveyor 4 by the conveyance device 2 or may stop the belt conveyor 4 as predetermined processing.

In addition, the present invention may be achieved as the moving object detection method executed by a computer such as the moving object detection device. In addition, the present invention may be achieved as the program for causing a computer to execute the moving object detection method. In addition, the present invention may be achieved as a computer-readable non-transitory recording medium in which such a program is recorded.

Although the camera 1 is disposed above the belt conveyor 4 and captures the lower side to capture the image of the belt conveyor 4 in the above-described embodiments, the camera 1 may be built in the device 10.

Although the conveyance device 2 is a device that conveys the article 5 to the belt conveyor 4 in the above-described embodiments, the conveyance device 2 and the belt conveyor 4 may be the same device (integrated device). In addition, the conveyance device 2 maybe another independent device as a control unit that controls the belt conveyor 4.

In the above-described embodiments, the following is performed. Regarding transfer of data, an ID is managed and tracked by the camera 1 and data is passed to a server of the data when access from a node side is received. Alternatively, when transfer of each node is completed, a transfer completion flag is output to the server, data is received from the server, and an input/output signal is output from the node to each device. In this manner, wiring work becomes easy, edge processing can be performed by the camera 1, and even if the CV in the middle is broken, relocating can be performed at the expense of another system (node in this case), and a PLC becomes unnecessary. In addition, in a case where a human intervenes for emergency processing or the like and detects the human as a moving object, the article 5 may be set not to be conveyed to the belt conveyor 4 without requiring a manual operation. In this case, the moving object detection device 10 can be built in a node. That is, the server is an example of the "user terminal 3" in the disclosed technology. However, the following may be performed. For example, the transfer of data may be performed by ID management and tracking using the camera 1 that captures an image at a wide angle, or may be performed using a plurality of cameras. Alternatively, in a case where data tracking is managed by the server or another device, the processing unit 14 may output the transfer completion flag to the server, and data tracking may be performed on the server side. In this manner, it is easy to change from a conventional centralized form in conveyance control to a terminal processing form to perform determination and processing when a moving object is detected on a node side, and the conveyance control can be performed without delay even when wiring of signal wires at the time of installation is saved, a construction period is shortened, risk is dispersed, emergency or a layout change occurs, or an object is added by human intervention.

In the above-described embodiments, the moving object detection device 10 acquires an image captured by the camera 1 and performs detection of a moving object based on the image. The moving object detection device 10 performs predetermined processing based on a detection result . For example, the moving object detection device 10 controls a conveyance device 2 based on the detection result. In addition, the moving object detection device 10 notifies the user terminal 3 when detecting the moving object, but can be appropriately changed within the scope of the present invention, and may further include, for example, another personal computer, another processor, another server, another central brain, or other conveyance devices (including a conveyance device at the subsequent stage and a conveyance device at the previous stage). A system may be constructed by combining these.

### (Region Designation Method)

An information processing method, specifically, a region designation method is a region designation method performed by a computer, and includes a specifying step of acquiring an image captured by a camera and specifying a predetermined region satisfying a predetermined condition in the image, and a setting step of setting the predetermined region specified in the specifying step or a region other than the predetermined region specified in the specifying step in the image as region designation. As a result, time for region designation can be greatly reduced, and automation of the region designation can be easily achieved. Specifically, in this method, the setting unit 912 sets a masked region or a region other than the masked region as region designation. The expression "set as region designation" means that a specific range or area is clearly defined and set to perform and a specific operation or processing within the range. For example, a control unit (setting unit) performs processing of performing object detection or the like in a specific range or area "set as region designation".

### (Region Designation Device)

An information processing device, specifically, a region designation device 910 includes a specifying unit 911, a setting unit 912, a detection unit 913, a processing unit 914, and a storage unit 915. The region designation device 910 has substantially the same configuration as the moving object detection device 10, but differs in the following points.

The specifying unit 911 has the same configuration as the specifying unit 11.

The setting unit 912 sets, as region designation, a predetermined region specified by the specifying unit 911 or a region other than the predetermined region specified by the specifying unit 911 in an image captured by the camera 1. Whether to set the predetermined region as the region designation or the region other than the predetermined region as the region designation is set in advance by a user or the like, and the setting unit 912 sets the region designation according to the setting by the user or the like. The setting by the user or the like is stored in the storage unit 915. For example, the specifying unit 911 masks the specified predetermined region, and the setting unit 912 sets the masked region or a region other than the masked region as the region designation.

After the region designation is set by the setting unit 912, it is not necessary to satisfy a predetermined condition. For example, in a case where the predetermined condition is blue, by covering a range and an area desired to be set as the region designation with a blue cloth or the like, the region including such a place in the image captured by the camera 1 is specified as the predetermined region satisfying the predetermined condition, and set as the region designation. After the region designation is set, the setting of the region designation is maintained even if the blue cloth or the like is removed.

### (Flowchart)

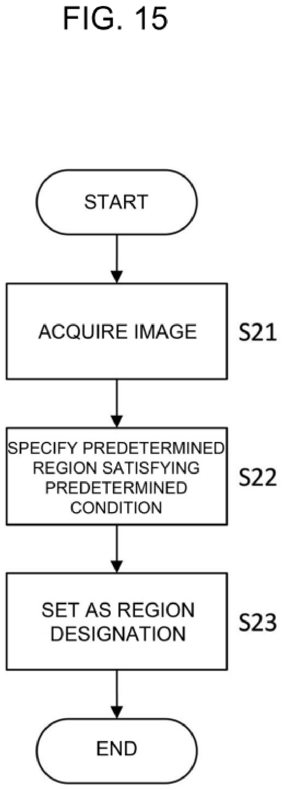

As illustrated in Fig. 15, the specifying unit 11 acquires an image captured by the camera 1 (step S21), and specifies a predetermined region satisfying a predetermined condition in the acquired image (step S22). The setting unit 12 sets, as region designation, the predetermined region specified by the specifying unit 11 or a region other than the predetermined region specified by the specifying unit 11 in the image captured by the camera 1 (step S23).

### Reference Signs List

- 1: camera
- 1a, 1b, 1c, 1d, 1e, 1f, 1g, 1h: image
- 2: conveyance device
- 3: user terminal
- 4: belt conveyor
- 5: article
- 6: planar member
- 7: linear member
- 8: point-shaped member
- 10: moving object detection device
- 11: specifying unit
- 12: setting unit
- 13: detection unit
- 14: processing unit
- 15: storage unit
- P: portion
- R: detection region

## Claims

1. A moving object detection device comprising:
a specifying unit that acquires an image captured by a camera and specifies a predetermined region satisfying a predetermined condition in the image;
a setting unit that sets the predetermined region specified by the specifying unit or a region other than the predetermined region specified by the specifying unit in the image as a detection region for performing detection of a moving object; and
a detection unit that performs the detection of the moving object in the detection region,
wherein the predetermined condition is a predetermined color.

2. The moving object detection device according to claim 1, further comprising a processing unit that performs predetermined processing based on a detection result of the detection unit.

3. The moving object detection device according to claim 2, wherein the predetermined processing is processing of notifying a terminal of a user of the moving object detection device.

4. The moving object detection device according to claim 1, wherein the predetermined color is a primary color.

5. The moving object detection device according to claim 4, wherein the primary color is red, green, or blue.

6. The moving object detection device according to any one of claims 1 to 3, wherein the detection unit detects the moving object using an inter-frame difference method.

7. The moving object detection device according to any one of claims 1 to 3, wherein the camera is disposed at a position where capturing of the image of a belt conveyor is possible.

8. A moving object detection method performed by a moving object detection device, the moving object detection method comprising:
a specifying step of acquiring an image captured by a camera and specifying a predetermined region satisfying a predetermined condition in the image;
a setting step of setting the predetermined region specified in the specifying step or a region other than the predetermined region specified in the specifying step in the image as a detection region for performing detection of a moving object; and
a detection step of performing the detection of the moving object in the detection region,
wherein the predetermined condition is a predetermined color.

9. A moving object detection system comprising:
a specifying unit that acquires an image captured by a camera and specifies a predetermined region satisfying a predetermined condition in the image;
a setting unit that sets the predetermined region specified by the specifying unit or a region other than the predetermined region specified by the specifying unit in the image as a detection region for performing detection of a moving object; and
a detection unit that performs the detection of the moving object in the detection region,
wherein the predetermined condition is a predetermined color.

10. A program for causing a computer to execute the moving object detection method according to claim 8.

11. An information processing method performed by a computer, the information processing method comprising:
a specifying step of acquiring an image captured by a camera and specifying a predetermined region satisfying a predetermined condition in the image; and
a setting step of setting the predetermined region specified in the specifying step or a region other than the predetermined region specified in the specifying step in the image as region designation,
wherein the predetermined condition is a predetermined color.

12. A program for causing a computer to execute the information processing method according to claim 11.
